# EUROPEAN PATENT APPLICATION

(11) **EP 4 831 931 A1**
(43) Date of publication of application: **28.10.2026**
(21) Application number: 25382417.1
(22) Date of filing: 25.04.2025
(51) Int. Cl.: G06V 10/25, G06V 10/44, G06V 20/69, G06V 10/776

(54) **METHOD FOR IMAGE-BASED CLASSIFICATION TO DETECT DISEASES SUCH AS ALZHEIMER'S USING MICROSCOPY IMAGES OF HUMAN DRIED PLASMA SAMPLES**

(71) Applicant: Asociación Centro de Investigación Cooperativa en Nanociencias, CIC Nanogune, 20018 Donostia-San Sebastián, Gipuzkoa (ES)
(72) Inventor: Seifert, Andreas, 20018 Donostia - San Sebastián, Gipuzkoa (ES); Abedi, Maryam, 20018 Donostia - San Sebastián, Gipuzkoa (ES)
(74) Representative: Sonnenberg Harrison Partnerschaft mbB

(57) **Abstract**

A method for image-based classification, usable to detect diseases, such as Alzheimer's disease, is proposed. The method uses microscopy images of human dried plasma samples (20a, 20b, ...), wherein the microscopy images (200a, 200b...) have been acquired through optical microscopy imaging. The method comprises preprocessing (730) of the microscopy images (200a, 200b, ...). Preprocessing comprises selecting (735) a region of interest (ROI) in the microscopy image (200a, 200b, ...) and transforming (739) the region of interest into polar coordinates to obtain a transformed ROI. The method further comprises extracting (760) features (50) from the transformed ROI (235) to generate a plurality of feature vectors in a feature space; reducing (770) a dimensionality of the feature space to obtain a reduced feature space; and classifying (780) the samples based on the plurality of feature vectors in the reduced feature space; thus producing a classification model (1235).

## Description

### Field of the disclosure

The present disclosure relates to a method for detecting Alzheimer's disease. In particular, the present disclosure relates to a method for image-based classification, usable to detect diseases such as Alzheimer's using microscopy images of human dried plasma samples, and a system and a non-invasive, computer-implemented method for detecting Alzheimer's disease based on microscopy images of blood plasma. In particular, the present disclosure describes a non-invasive, computer-implemented method utilizing microscopy images of dried human plasma samples for detection.

### Background of the disclosure

Alzheimer's disease (AD) is a progressive neurological disorder with no known cure. However, early detection of AD can enable interventions to slow the progression of AD at an early stage.

There are various methods currently used in practice for detecting AD, including cognitive assessments, neuroimaging techniques (such as structural magnetic resonance imaging (MRI), functional MRI, positron emission tomography (PET), single-photon emission computed tomography (SPECT)), genetic testing, and biomarkers-based approaches. While these methods offer valuable diagnostic capabilities, they also have limitations. Many of them are primarily useful for diagnosis and monitoring the progression of AD rather than early detection. Additionally, some methods are resource-intensive and invasive, which is concerning given the high prevalence of AD among elderly individuals. Therefore, there is a need for a method that enables early-stage detection of AD while being simple, non-invasive, and repeatable.

### Summary of the disclosure

The present disclosure describes a computer-implemented method for establishing a classification model for detection of Alzheimer's disease (AD). The disclosed method is non-invasive and computationally efficient. Furthermore, the disclosed method enables diagnosis of AD with improved diagnostic accuracy. The disclosed method is based on the analysis of microscopy images captured from human dried plasma samples (or dried human blood plasma samples).

The method comprises processing microscopy images of a set of human dried plasma samples. The processing of the microscopy images comprises selecting a region of interest (ROI) in the microscopy images and determining the presence of AD-indicative patterns in the microscopy images to generate a plurality of feature vectors in a feature space. Dimensionality of the feature space is reduced and then the microscopy images are classified.

In an aspect, the microscopy images are captured using microscopy imaging, preferably optical microscopy.

The method involves image processing and machine learning on microscopy images of dried human plasma samples. The process includes identifying AD-indicative patterns by selecting a region of interest and extracting features to generate a plurality of feature vectors in a feature space. A cascading dimensionality reduction is then applied to the feature space, and the samples are classified.

An image set consists of microscopy images from the H/HC group (control group of healthy individuals), the PCL group (patients showing preclinical signs of AD with normal cognitive function), or the PD group (patients with prodromal symptoms and mild cognitive). The image set is used in AD trial which applies the method according to the disclosure to the image set.

The pixel count (resolution) of the captured images is set such that structures in at least some of the human dried plasma samples are analyzable based on at least some of the images.

The method may further comprise transforming the ROI to polar coordinates of a polar coordinate system, to produce a transformed ROI. This transformation aligns radial patterns of the captured images to facilitate effective pattern recognition in subsequent steps.

The method may further comprise enhancing the contrast of the selected ROI in the polar coordinate system.

Determining the presence of image features involves detecting edges, i.e., significant changes in pixel intensity, within the transformed ROI, which reveal structural details and pattern boundaries critical for distinguishing Alzheimer's from healthy control samples.

Features are distinctive patterns that enable analyzing an image by capturing essential characteristics that differentiate objects or regions within the image. These features play a role in various image processing tasks, including classification, segmentation, and object recognition.

An edge is defined as a boundary where the intensity changes between adjacent pixels.

Image features can include attributes such as shape, texture, and color, along with structural elements like corners, blobs, ridges, keypoints, contours, edges and gradients.

The transformed ROI following edge detection is referred to as the feature image.

A feature image refers to an image that has been pre-processed and is now ready for feature extraction. The method may further include downsampling the feature image. The downsampling may include multi-stage downsampling. The method may further comprise filtering the feature image. The method may further comprise generating feature vectors from feature images. Different filters can be applied in various directions and scales to each feature image. In one embodiment, Gabor filters can be applied in 8 different directions and at one scale. The phases of Gabor responses are selected for further processing. This filtering technique is useful in capturing texture information and specific orientations of patterns within the selected ROI, hence within the captured images.

The method may further comprise normalizing the feature vectors and/or adjusting the mean value of components of the individual feature vectors to zero. The classification may comprise one or more of Principal Component Analysis, Fisher's Discriminant Analysis, or Linear Discriminant Analysis.

The method may be implemented by executing a computer program, stored on a non-transitory computer-readable medium, in a processor.

The classification model can be used for detecting AD in a human dried plasma sample by inputting an image of a new human dried plasma sample into a processor, extracting features from the input image, and processing the extracted features with the classification model.

In another aspect of the invention, a system for detecting Alzheimer's disease in a human dried plasma sample is disclosed. The system comprises an image database storing images of human dried plasma samples, a classification model generated from a plurality of images of the human dried plasma samples according to the method, and a processor for inputting at least one image.

Taking plasma samples from individuals is minimally invasive. In addition, preparing human dried plasma samples and taking images by optical microscopy is straightforward and not resource- intensive.

### Brief description of the drawings

FIGS. 1A to 1C show a comparison of image contrasts for different representations of a representative image from an image set in AD trial. In FIG. 1A, the representative is an RGB image captured under green florescence light. FIG. 1B displays the intensity channel of said image after transforming it to the CIELAB color space, which is known for its independence from chrominance and its correspondence to human perception. FIG. 1C shows the intensity channel of said image after the CIELAB transformation, followed by histogram stretching.
FIG. 2A-2F illustrates inter-class and intra-class visual diversity (also known as within-group variance and between-group variance, respectively) observed in a set of microscopy images from AD trial. FIGS. 2A and 2B show images from the H/HC group. FIGS. 2C and 2D show images from the PCL group (. FIGS. 2E and 2F show images from the PD group.
FIGS. 3A-3C show a selection of a region of interest (ROI) from a microscopy image of a human dried plasma sample, followed by its transformation into polar coordinates and enhancement. FIG. 3A displays an exemplary image from the image set representing human dried plasma samples. FIG. 3B shows an enlarged view of the selected ROI. FIG. 3C shows the enhanced ROI of FIG. 3B transformed into polar coordinates (*r,φ*) , with the vertical axis representing r and the horizontal axis representing *φ.* In this space, the radial distribution of patterns is aligned.

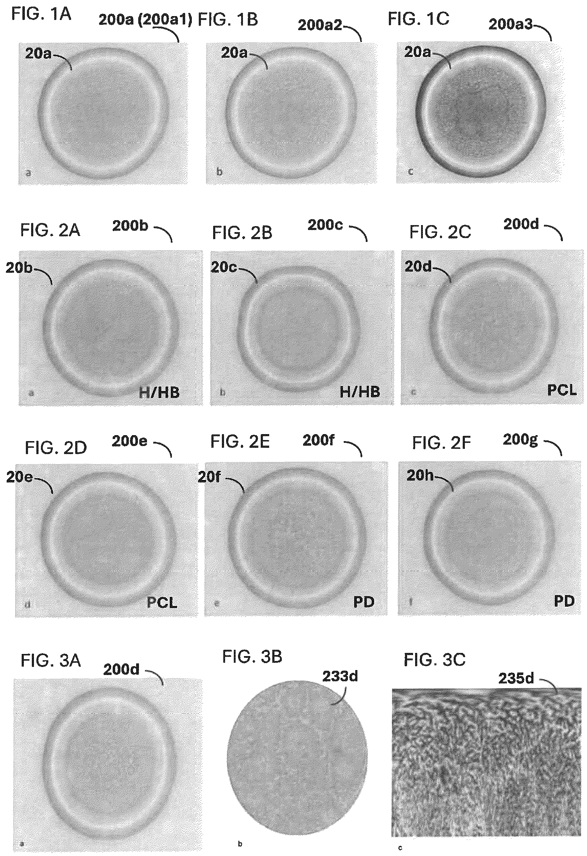

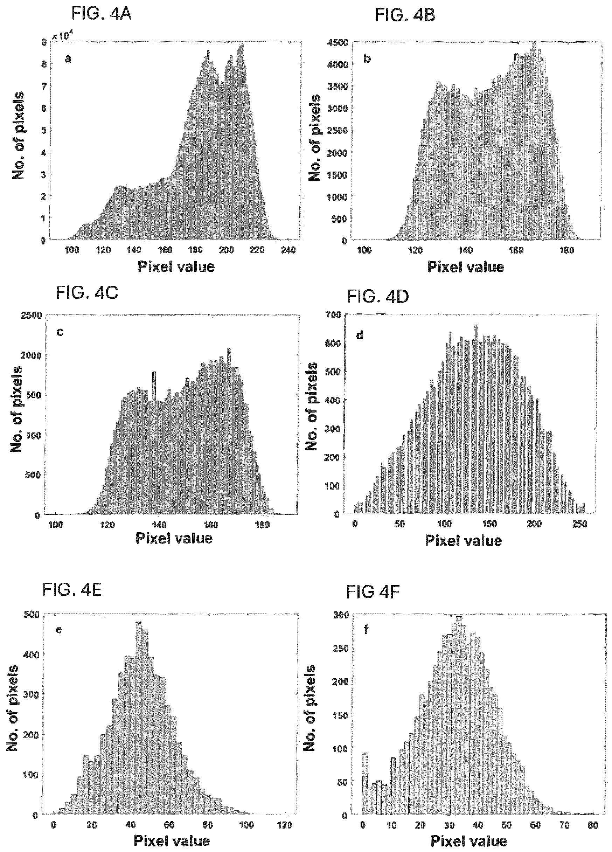

Figures 4A-F show histograms of pixel values before and after preprocessing the image set 200. FIG. 4A shows a histogram of the exemplary image shown in FIG. 3A (number of pixels:2056 × 2452 ) before selecting an ROI, which represents multiple components of a Gaussian mixture model. FIG. 4B shows a histogram with fewer Gaussian components and a narrowed distribution (total number of pixels: 205,861) FIG. 4B belongs to the ROI shown in FIG. 3B. FIG. 4C shows the histogram of FIG.3C., wherein, due to resampling in the polar coordinate system, the shape of the histogram has been changed and the number of pixels has been reduced (total number of pixels: 92,160). FIG. 4D shows a histogram of edge intensities in feature image, i.e., after applying Canny edge detector on the transformed ROI shown in FIG. 3C. The edge intensities are distributed according to a normal distribution, which indicates well-defined edges. FIG. 4E shows a histogram of edge intensities after downsampling of the feature image, using the Lanczos3 interpolation following a downsampling of factor 4. FIG. 4F shows a histogram of edge intensities after downsampling of the feature image, using the Gaussian pyramid, following a downsampling of factor 4. Both FIGS. 4E and 4F show that the downsampled edge intensities have a Gaussian distribution, which indicates preserved edge information.
FIG. 5A shows a portrait of Albert Einstein as a natural image. FIG. 5B shows the feature image generated for the transformed and enhanced ROI shown in FIG. 3C. Compared to FIG. 5A as a representative of natural images, FIG. 5B exhibits minimal scale variation and notable directional diversity. Feature diversity in terms of scale and orientation in FIG. 5B is low compared to natural image of FIG. 5A.
FIG. 6A shows a Quantile-Quantile (Q-Q) plot of all samples of the AD trial in an 83-dimensional PC space. FIG. 6B shows a Quantile-Quantile (Q-Q) plot of all samples of the AD trial in a 9-dimensional Fisher PC space.
FIG. 7A shows Fisher scores (variance ratios of inter-class variance to the intra-class variance) of 83 Principal Components (PCs) of the AD trial, sorted by their discriminative power. The 9 highest-ranked PCs, indicated by the largest Fisher scores, are selected to form a Fisher space to which feature vectors are transformed. FIG. 7B shows corresponding eigenvalues of the within-class scatter matrix (S_{W}) divided by the between-class scatter matrix (S_{B}) for the selected Fisher PCs.
FIG. 8 shows ROC (receiver operating characteristic) curve for the AD trial, with area under the curve (AUC-ROC) of 0.91, with the optimal threshold showing sensitivity and specificity of about 90%.
FIG. 9 shows microscopy images of human dried plasma samples from lung cancerous individuals, illustrating a within-class visual diversity.
FIG. 10 shows a ROC curve for a trial comprising samples having Alzheimer's disease and cancerous samples (AUC-ROC = 0.92), with the optimal threshold showing sensitivity and specificity of 85%.
FIG 11 shows an overview of the method.
FIG. 12 shows an exemplary system for implementing the computer-implemented method of this disclosure.
Fig. 13 shows an exemplary method for detecting Alzheimer's disease using optical microscopy images of human dried plasma samples

### Detailed description

The invention will now be described with reference to the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

The present disclosure describes a computer-implemented method for developing a classification model 1235 for detecting AD through classifying images 200a, 200b... from an image set 200. Any image 200a, 200b comprises a set of pixels. Pixels of the set of pixels can be defined by pixel coordinates and at least one pixel value. The pixel coordinates and at least one pixel value are linked together. In one aspect of the disclosure, the pixel coordinates are two-dimensional and represent position in a two-dimensional plane. Examples of these two-dimensional coordinates are Cartesian coordinates or polar coordinates.

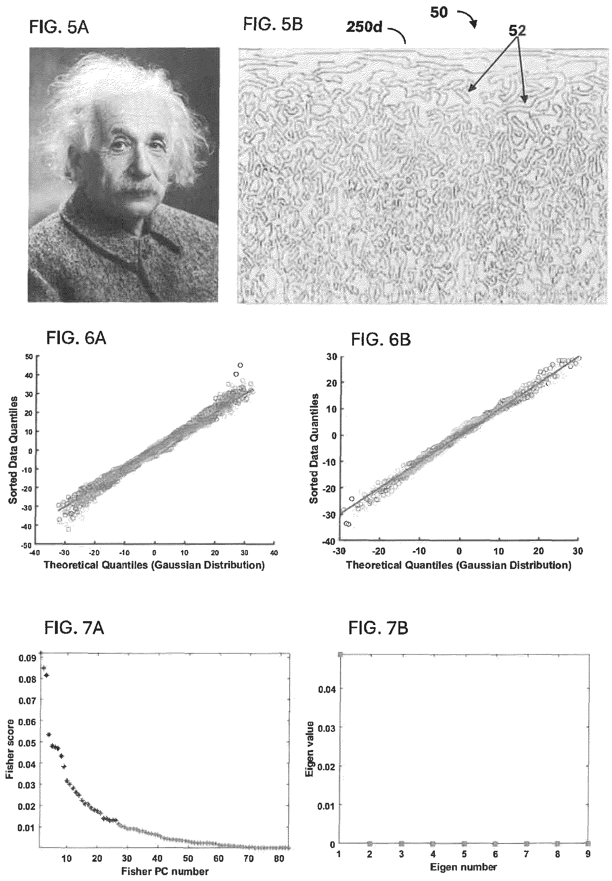

The method according to the disclosure enables capturing visual diversity based on features 50 in the selected ROI (see FIG. 2 and FIG. 5B) in images 200a, 200b, etc. The features 50 may be subtle, i.e. not perceptible to the human eye. The method overcomes the limitations of human visual perception in detecting the inter-class and intra-class visual diversity in the set of images 200.

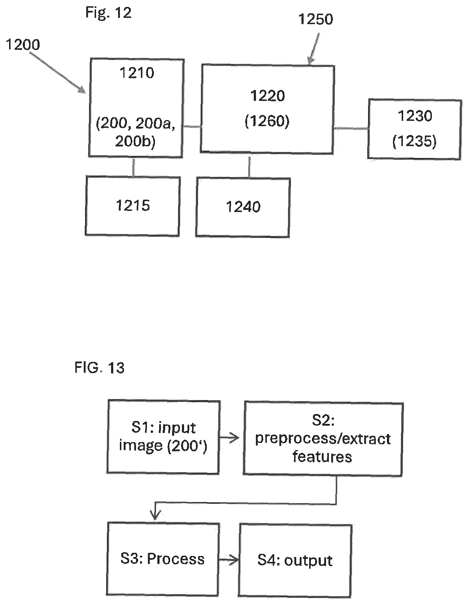

The disclosed method can be implemented in a system 1200, as shown in FIG. 12. The disclosed method is computationally efficient. The system 1200 comprises an image database 1210 storing the set of images 200 with an input device 1215 for inputting the set of images 200. The image database is connected to a processor 1220, which performs the method. A storage system 1230 stores a classification model 1235, which is generated using the set of images. An output device 1240 is capable of display the results. A test image 1250 is used as an input image to be analyzed by the processor 1220 using the classification model. A computer program product 1260 can be executed on the processor 1220 to process input images of human dried plasma samples from an individual using the classification model 1235 to detect the presence or absence of AD in the imaged dried plasma sample.

Using the feature vectors obtained after processing of the set of images 200, the method employs the stored classification for computer-implemented AD diagnosing. In one aspect, the method uses a machine learning (ML) algorithm or a deep learning (DL) algorithm for training the classification model in the processor 1220 using labelled ones of the images 200a, 200b... from the set of images 200. The labelled images identify the features in the images 200a, 200b... and represent either an AD-positive case or an AD-negative case.

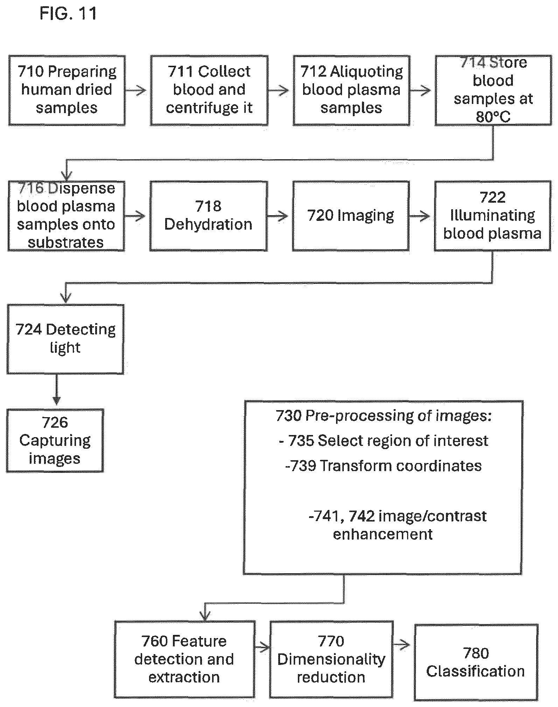

A trial (referred to as AD trial) of the disclosed method (see FIG. 11) was conducted. Several experts in AD diagnosing labelled the images 200a, 200b from a cohort of 84 patients to provide a ground truth. Note that the cohort size is not limited to 84; it may be larger or smaller. The experts used a conventional diagnostic process, which involved analyzing cognitive assessment results and cerebrospinal fluid (CSF) biomarker values (A*β*42, p-Tau, total-Tau) obtained from the volunteers, along with comprehensive characterizations. The volunteers were divided into three groups. A first group was a control group of healthy individuals (H/HC group). A second group consisted of patients with preclinical AD (PCL group), who had abnormal biomarker values but normal cognitive function. A third group included patients with prodromal AD (PD group), who exhibited mild cognitive impairment. The control group was defined based on specific CSF cutoff values (A*β*42 > 1030 pg/mL, total-Tau < 300 pg/mL, p-Tau < 27 pg/mL), ensuring the absence of ATN pathology and cognitive impairment.

The method comprises a step 710 of preparing human dried plasma samples 20. This preparation involved collecting, in step 711 the blood in 10 mL EDTA tubes from the 84 patients and centrifuged at 4°C to separate blood plasma from the cellular fraction, thus generating a set of liquid blood plasma samples. The set of liquid blood plasma samples was aliquoted in step 712 and stored at -80°C within one hour of collection in step 714. After defrosting at room temperature, the liquid blood plasma samples were carefully dispensed as 1 µL droplets onto glass substrates in step 716 and then dehydrated under vacuum for 10 minutes in step 718 to dry the droplets. After dehydrating the droplets, human dried plasma samples 20 were prepared.

### Imaging- capturing images

The method for detecting AD comprises a step 720 of microscopy imaging the human dried plasma samples 20. Following the dehydration step 718, the human dried plasma samples 20 were imaged using a microscope comprising a light source, an objective, and a detector. The detector was connected to the input device 1215 of the system 1200 described on Figure 12.

The step 720 of microscopy imaging includes a step 722 of illuminating the human dried plasma samples 20 using the light source. The human dried plasma samples 20 may be illuminated either consecutively or concurrently.

The step 720 of microscopy imaging further includes a step 724 of detecting light from the human dried plasma samples 20 using the detector.

At step 726, a set of images 200 is captured from the detected light using the sensors (sensor array). In the exemplary AD trial, the set of images 200 consists of 84 images for the volunteers. For each human dried plasma sample 20, a corresponding image 200 is captured.

In one aspect of the disclosure, the microscope is a Zeiss Axio Imager M2m microscope, equipped with a Zeiss Colibri 7 green light source for illuminating the human dried plasma samples 20, and a 5X objective. The use of green light illumination enhanced the contrast in the set of images 200. Other microscopy setups may be used; this example does not limit the scope of the invention.

The AD trial included 35 cases of healthy controls (H/HC group), and 49 cases diagnosed with AD, including 24 with preclinical AD (PCL group) and 25 with prodromal AD (PD group). This provides a sufficient sample size for developing and training the classification model.

The images 200a, 200b... of the set of images 200 should have a high pixel resolution in terms of a pixel number (pixel count). During the AD trial, the set of images 200 was captured such that the pixel count of the images 200a, 200b... was 2056-by-2452 pixels, totalling over 5 million pixels. It is to be noted that for the method of the present disclosure the pixel count is not restricted to the afore-mentioned example of the AD trial, in particular not limited to the above mentioned 2056 by 2452 resolution. The pixel count is set by the user during the step 720 of microscopy imaging the set of images 200.

For example, the user should set the pixel count in the images to a level that enables the analysis of subtle patterns in the AD image set 200 relevant to diagnosing AD. These patterns may be nano-sized and/or micro-sized and are generally invisible to human eye. The resolution (or pixel count) should be set to a level that allows detection of these nanostructures and microstructures, thereby enabling the application of method according to the present disclosure.

In one aspect, green light is used for illuminating the human dried plasma samples 20 during the illumination step 722. As a result, the set of the images 200 has a green appearance, which is also perceptible to the human eye (see FIG. 1A, which shows a representation 200a1 of one selected image 200a of the set of images 200). The HSV colour space can be used for further analysis. The HSV colour space is an alternative to the RGB based on cylindrical coordinates, in which H represents hue, S represents saturation, and V represents value (brightness). Based on the analysis, any image from the image set 200 in the HSV color space has the saturation value of S = 1 and the hue of H = 0.33, corresponding to a fully saturated green colour. These observed saturation and hue are expected based on the use of green fluorescence imaging in the AD trial (illumination with green light). The distribution of the value (brightness) across the pixels in the representation 200a1, shown in FIG. 1A, follows a Gaussian mixture model, as illustrated in FIG. 4A. In the exemplary histogram of FIG. 4A, the brightness value (V) ranges from shadow (low brightness, *V* ≈ 100) to highlight (high brightness, *V* ≈ 230).

In one aspect, the image set 200 may alternatively be processed using the CIELAB color space. An intensity channel can be derived from the CIELAB color space to represent the selected image 200a. This intensity channel is independent of chrominance, aligns with human perception, and results in a representation 200a2 with lower contrast compared to the representation 200a1 (see FIGS. 1A and 1B). The lower contrast in representation 200a2 is due to a more limited range of intensity values in the CIELAB color space (0 to 100) compared to the HSV color space.

In another aspect, histogram stretching may be applied to the set of images 200. It should be noted that histogram stretching is applied on the intensity channel of images in CIELAB color space to compensate for the limited range of intensity. Histogram stretching is an example of histogram manipulation. Other types of histogram manipulation, such as Contrast Limited Adaptive Histogram Equalization (CLAHE), may also be used. Applying histogram stretching to the selected image 200a1 enhances contrast, as shown in FIG. 1C, resulting in image 200a3. The histogram manipulation alters the statistical properties of the resulting image 200a3 compared to the selected image 200a1. These changes can influence the classification of image 200a3(e.g., a "AD-positive" or "AD-negative;" see below).

### Preprocessing of images

The method for image-based classification includes a step 730 of preprocessing the images 200a, 200b, ..., of the image set 200. The preprocessing 730 of the image set 200 results in a preprocessed image set, which is used for the further analysis. In one aspect, preprocessing 730 of the image set 200 comprises a step 735 of selecting a region of interest (ROI) in images 200a, 200b... of the image set 200. The selecting 735 of the ROI results in a set of ROIs 233a, 233b..., corresponding to the set of images 200a, 200b, ... for which the ROIs were selected.

In one embodiment, the ROI is selected using a binary circular mask with a radius of 256 pixels. Center cropping is applied, assigning a value of 1 inside the mask and a value of 0 outside the mask. The 256-pixel radius was chosen as a trade-off for all captured images and represents approximately 10% of the image width. This center cropping method focuses the analysis on the most relevant part of the image. The selecting of the ROI enables a more targeted analysis of the image set 200. The pixel count of the images is reduced by selecting the ROI, while preserving details within the ROI itself. The reduced pixel count decreases computational requirements for feature extraction (as described below) and the classification (as described below). Furthermore, selecting the ROI lowers the dimensionality of the feature vector (as described below) by reducing the number of features in the corresponding image. A smaller ROI results in fewer features and a shorter and more compact feature vector, as described below.

In another aspect, the selecting of the ROI may include using methods such as salient object detection or segmentation. Alternatively, the selecting of the ROI may include using a non-adaptive technique. Non-adaptive techniques do not account for differences between images when selecting the ROI. Using non-adaptive techniques is computationally less expensive than salient object detection or segmentation and simplifies the method.

With reference to FIGS. 3A to 3B, an example of ROI selection is illustrated. FIG. 3A shows an exemplary image 200d from the image set 200, with a selected ROI 233d. In this example, the ROI 233d has a circular shape with a radius of 256 pixels, corresponding to approximately 10% of the image width. The ROI 233d is centered in the exemplary image 200d.

It will be appreciated that the ROI 233d may have a non-circular shape. For example, the selected ROI may be rectangular, polygonal, elliptical, irregular, or may have any shape chosen by the user. FIG. 3B provides an enlarged view of the selected ROI 233d. The ROI 233d may be generated by image cropping from the exemplary image 200d. In FIG. 3B, the presence of a plurality of patterns can be seen within the selected ROI 233d.

The preprocessing 730 of the image set 200 may comprise a transformation step 739, where the selected ROI is transformed into polar coordinates. For example, the images 200a, 200b may be transformed from Cartesian coordinates (*x,y*) to polar coordinates (*r,φ*).

After the transformation step 739, the ROI is converted to the polar coordinates. Each pixel in the ROI will have a pixel value and a pair of polar coordinates (*r,φ*). In one aspect, the polar coordinates (*r,φ*) of a pixel will correspond to the same position as the original Cartesian coordinates (*x,y*) before the transformation 739. In another aspect, the polar coordinates will represent a position near the original Cartesian position, in which case the pixel value may be resampled (as described below).

For example, the selected ROI 233d shown in FIG. 3B is transformed from Cartesian coordinates (*x,y*) to polar coordinates (*r,φ*) as shown in FIG. 3C. The transformed ROI 235d is obtained from the selected ROI 233d through the transformation 739 to polar coordinates (*r,φ*). In FIG. 3C, the vertical axis represents the polar coordinate r, and the horizontal axis represents the polar coordinate *φ*.

The transformation 739 into polar coordinates (*r,φ*) aligns the radial distribution of patterns, facilitating further analysis (e.g., filtering, downsampling, detection, and extraction of features; see below) of the selected ROI 233d. This alignment is due to the circular symmetry of the round shape of the droplets in the human dried plasma samples 20 and to symmetrical diffusion processes within the droplets

As shown in FIG. 3C, the transformed ROI 235d has a rectangular format with dimensions of 256-by-360 pixels (92160 pixels). This corresponds to 256 intervals for representing values of r and 360 intervals for representing *φ* (e.g., from 0 degrees to 359 degrees). It should be noted that the correspondence between the pixels and the degrees of the polar coordinate *φ* can be chosen differently. In other words, a pixel along the *φ* direction may correspond to a *φ* interval different from 1 degree.

The transformation step 739 to polar coordinates, resulting in the transformed ROI 235d shown in FIG. 3C, may include resampling the pixel values associated with the selected circular ROI shown in FIG. 3B. The resampling process includes calculating transformed pixel values by interpolating the pixel values of certain pixels from the selected ROI 233d. For a point (*rᵢ*, *φᵢ*) in polar coordinates of the transformed ROI 235d, the pixel values from the selected ROI 233d shown in FIG. 3B, which have Cartesian coordinates close to (*rᵢ cos φᵢ , rᵢ* sin *φᵢ*), are interpolated. The resampling reduces computational requirements. By selecting only 256 pixels (in radius) through all 360 sectors, the number of pixels is reduced, and therefore, the length of the final feature vector is reduced.

In one aspect, the transformed image in polar coordinates has a rectangular shape (256-by-360 pixels), as shown in FIG. 3C. However, this is not limiting the invention, as any shape with any dimensions can be selected. The rectangular shape, or ideally, square shape facilitates the use of image processing techniques, such as transformation, filtering and compression. For further analysis, the image is split into small square patches.

In one aspect, the method 700 further comprises a step 741 of image enhancement to improve feature visibility within the transformed ROI. The image enhancement step 741 may be carried out by normalizing and/or mean-shifting the transformed ROI 235d or by any other known methods. The normalizing and/or mean-shifting 741 enhances the transformed ROI 235d. The normalizing and/or mean-shifting 741 further speeds up the method 700 according to the disclosure. Moreover, the normalizing and/or mean-shifting 741 helps to compensate for potential changes in the microscope's operation settings during the image capturing step 720 .... Examples of such changes in the microscope's operation settings include variations in the illumination of the human dried plasma samples 20 during image capturing.

In a further aspect, the method 700 comprises a contrast enhancement step 742 using histogram manipulation on the normalized and/or mean-shifted transformed ROI 235d. In one example, contrast enhancement may be applied such that 1% of the pixel intensity is saturated at both low and high intensities. Applying other linear or non-linear image enhancement techniques such as Gamma correction or CLAHE (Contrast-Limited Adaptive Histogram Equalization) is possible.

In FIG. 4A, a histogram of the exemplary image 200d of FIG. 3A is shown. The histogram in FIG. 4A shows the presence of multiple Gaussian components that result in a Gaussian mixture model distribution. The selecting step 735 of the ROI, as illustrated by way of example in FIGS. 3A-3B, results in a distribution containing a subgroup of the multiple Gaussian components previously present (compare the histograms shown in FIGS. 4A and 4B). The histogram of FIG. 4B representing the subgroup of the multiple Gaussian components is narrower (as seen in the range covered by x axes of FIGS. 4A and 4B) and an associated intensity distribution (pixel value distribution) is correspondingly more concentrated. This narrower distribution results from the removal of noise and of interference from the droplet background and surrounding areas. After transforming to polar coordinates, some changes in the histograms appear (see FIG. 4C) because of the resampling, which includes the interpolation of some of the pixel values of the selected ROI 233d.

### Feature detection followed by feature extraction

Image features are distinctive patterns that enable analyzing an image by capturing essential characteristics that differentiate objects or regions within the image. These features play a role in various image processing tasks, including classification, segmentation, and object recognition.

Features can include attributes such as shape, texture, and color, along with structural elements like edges, corners, blobs, ridges, keypoints, contours, and gradients.

An edge is defined as a boundary where the intensity change occurs between adjacent pixels. An example of an edge in the image set 200 is shown at edge 52 in FIG. 5B. The severity of the intensity variation can be evaluated by setting one or more thresholds.

Transformed ROIs after enhancement and edge detection are called feature images.

In the classification of images within image set 200, texture serves as the dominant image feature, as it effectively captures subtle variations in AD indicative patterns that are imperceptible to human eye. The texture captures the repetition, orientation, and spatial frequency of intensity variations in an image. The intensity variations may include structural properties such as edges, gradients, and contrast, which define the geometric and spatial organization of the AD indicative patterns. Texture may encompass non-structural (statistical) properties, such as entropy, and homogeneity which describe the distribution of intensity values within a region.

There exist various algorithms for edge detection, each designed to enhance specific aspects of edge representation. Common techniques include the Sobel, Prewitt, Roberts, Canny, and Laplacian operators. These algorithms differ in their sensitivity to noise, computational complexity, and ability to detect fine or smooth edges. Selecting an appropriate edge detection method depends on the application, as different techniques offer trade-offs between accuracy, efficiency, and robustness against noise or variations in lighting conditions. In this disclosure Canny edge detector is customised based on the images of image set 200 and applied on the transformed ROIs after enhancement.

A visual diversity is observed within and between the H/HC group, the PC group, and the PD group. This inter-class and intra-class variation (see FIG. 2A-2F) makes it impossible for a human to classify the images 200a, 200b... of the image set 200.

A feature image is made for each image 200a, 200b ... in image set 200. FIG. 5B shows the feature image generated for the transformed ROI 250d shown in FIG. 3C. The feature image 250d in FIG. 5B shows locations of a plurality of the edges 52.

The method according to the disclosure comprises a feature extraction step 760 for each feature image. The feature extraction step 760 overcomes the limitations of human perception in classifying images within image set 200.

A feature vector is generated for any feature image. During the feature extraction step 760, a set of feature vectors is extracted for all images, and this is stored in memory.

A structural feature extraction method includes techniques such as the Gabor filter and the Canny edge detector, both of which are used to extract structural information from an image. These methods focus on detecting specific features, such as edges and texture patterns, that represent the geometric structure of an image. The Gabor filter uses sinusoidal functions to capture frequency and orientation, while the Canny edge detector identifies sharp intensity transitions that define boundaries within an image. Both methods emphasize the analysis of local and global structures, enabling effective feature extraction for tasks like edge detection, texture analysis, and image segmentation.

An example of a non-structural or statistical feature extraction method is the Histogram of Oriented Gradients (HOG), Gray Level Co-occurrence Matrix (GLCM), or Local Binary Patterns (LBP), all of which rely on statistical information derived from pixel intensities and their spatial relationships. These methods do not focus on specific structural elements like edges or textures but instead capture statistical properties such as intensity distribution, gradient orientation, and spatial dependencies between pixels. These statistical features are commonly used in image classification, pattern recognition, and texture analysis, providing robust descriptors for distinguishing between different types of image content.

An example of a trigonometric method is the Gabor filter, which incorporates a sinusoidal function. Other examples of trigonometric methods include the Fourier Transform and Wavelet Transform, both of which are used for analyzing frequency components in an image. These methods typically involve sinusoidal or oscillatory functions to capture frequency, phase, and orientation information, making them effective for tasks such as texture analysis, edge detection, and signal processing.

An example of a non-trigonometric method is the Canny edge detector, which does not incorporate any sinusoidal function. Other non-trigonometric methods include Sobel edge detection, Prewitt operator, and Laplacian of Gaussian (LoG). These methods primarily rely on gradient-based approaches, where edges are detected by analyzing intensity changes within an image. The feature extraction step 760 may include identifying features across different scales and directions.

Spatial frequencies can span a wide range of scales in any image. In the Einstein image of Fig. 5A, high spatial frequencies are observed in the hair region, whereas the body contains predominantly low spatial frequencies. Additionally, the image features are oriented in all directions.

An example of the features and the localized structure in image set 200 is the edge 52. It should be noted that specific features within the image, such as edges, represent localized structures that carry meaningful information. For example, in image set 200, the edge 52 refers to a visible transition in intensity or structure (like a boundary between two regions). These localized features help distinguish between different regions or conditions in the image, such as healthy controls versus diseased.

The so-called Canny edge detector, which is used to make feature images from transformed ROIs, is an example of a structural, non-trigonometric algorithm, which enables detecting localized patterns in the image. The trigonometric filters and/or non-trigonometric filters enable the feature extraction step 760. Gabor filtering is an example of the structural, trigonometric methods, which enables detecting different frequency components of the image across various directions. Gaussian pyramid is an example of the non-structural, non-trigonometric method. Lanczos interpolation is an example of the non-structural, trigonometric method. Both the Gaussian pyramid and the Lanczos interpolation may be applied for the downsampling step. The Lanczos interpolation reduces the image size while preserving details, such as the feature 50.

In one aspect, the Canny edge detector is applied to the images 200a, 200b... to detect the edges 52. The Canny edge detector effectively identifies the edges 52 with a low false-positive rate. When the Canny edge detector is applied to the image set 200 comprising exemplary images 200a, 200b, ..., the resulting set of feature images exhibits histograms of edge intensities that follow a normal distribution (see FIG. 4D for an example from the set). This suggests that the edges 52 are well-defined with consistent intensity variations across the images. The normal distribution of edge intensities ensures that these edges 52 can be regarded as reliable features for classifying the original images, as will be discussed in detail later.

In one aspect of the disclosure, the feature extraction step 760 may comprise downsampling the feature images. The downsampling results in shorter feature vectors. Moreover, the downsampling reduces the computational costs of the disclosed method 700. For example, during the AD trial, the downsampling was performed on the set of feature images using a downsampling factor of 4 (2 per direction, i.e. 2 in the x-direction and 2 in the y-direction), resulting in images with dimensions of 64 by 90 pixels (5,760 pixels). However, the downsampling is not restricted to a factor of 4; it can take on other values as well.

In non-limiting aspects, the downsampling may be carried out using Lanczos interpolation or Gaussian pyramid Both of these downsampling methods preserve the normal distribution of edges after downsampling (see FIGS. 4E and 4F), and classification results demonstratethe effectiveness of both techniques. The Lanczos interpolation minimizes aliasing and preserves edge information. The Gaussian pyramid is advantageous due to its simplicity, speed, and low computational cost. Additionally, the Gaussian pyramid supports the multi-scale image processing. The Gaussian pyramid is less prone to generate artifacts owing to the inherent low-pass filtering provided by the Gaussian function.

The feature image 250d, shown in FIG. 5B, exhibits minimal scale variation and notable directional diversity among features. For comparison, the scale or size and the directional diversity of the features in a portrait of Albert Einstein are shown in FIG. 5A. The comparison between an AD feature image in FIG. 5B and the portrait (natural image) of Albert Einstein in FIG. 5A can be used for filter design in a next step.

In one aspect of the disclosure, the feature extraction step 760 may further comprise Gabor filtering. Gabor filtering includes defining a set of Gabor filters to capture both spatial and frequency information from the image. The application of Gabor filtering provides a balance between reducing the length of the feature vector, minimizing the number of samples in the image set 200, lowering the computational cost of method, and maximizing the classification accuracy applied to the image set 200. In one example, the Gabor filtering may include designing the set of Gabor filters at a single scale in several directions. The number of the directions may be eight but is not limited thereto. The directions may be oriented at regular intervals between zero and 180 degrees, e.g., at the angles 0 degrees, 22.5 degrees, 45 degrees, 67.5 degrees, 90 degrees, 112.5 degrees, 135 degrees, and 157.5 degrees. However, the directions may also be oriented at irregular intervals between 0 degrees and 180 degrees. In the Gabor filtering, the filtered images can be represented in terms of a phase component and an amplitude component. The phase component and the amplitude component emphasize regions with similar frequency and orientation and may serve as feature descriptors to describe the features.

In one aspect, the phase components of the filtered images, calculated by the set of Gabor filters, are kept while the amplitude components of those filtered images, calculated by the set of Gabor filters, are discarded. In this aspect, the Gabor-filtered feature vector contains the phase components.

In this example, each downsampled feature image in image set 200 has dimensions of 64-by-90 pixels. A feature vector is created by vectorizing all the Gabor- filtered responses of each image and then stacking them one by one. This feature vector, based on the designed Gabor filters in eight directions and a single scale, contains 64 × 90 × 8 = 46,080 elements.

In one aspect of the disclosure, due to the large number of elements in the feature vectors (i.e., 46,080), the feature extraction step 760 may comprise a further step of the downsampling. This additional downsampling step may be applied to the Gabor-filtered images.

In the case of the afore-mentioned example, the Gaussian pyramid may be used for the downsampling of the Gabor-filtered images.

A feature vector is made for each image by vectorizing all eight filter responses after downsampling and then stacking them one by one.

A downsampling factor of 2 in both the x-direction and y-direction results in the final feature vectors containing 46,080/4=11,520 elements.

The additional downsampling factor is not limited to a value of 2 and can take on different values. When selecting the downsampling factor, it is important to consider that higher values may cause aliasing and a reduction in classification accuracy. The user should choose the downsampling factor in such a way that the feature vector size and potential issues, such as aliasing or decreased classification accuracy, are balanced according to the user's specific needs. In a further aspect of the disclosure, the feature extraction step 760 may further comprise normalizing the feature vector and/or adjusting the feature vector to have a zero-mean value (i.e., the sum of the components of any given feature vector is equal to zero). Normalizing and/or adjusting the feature vector to a mean value of zero ensures consistency and facilitates the removal of bias.

Features in a dataset may have different ranges e.g., one feature may vary between 0 and 100, while another varies between 0 and 255. Some algorithms like gradient descent or distance-based methods (e.g., SVMs, k-NNs) are sensitive to differences in the feature range. A feature with a larger feature range can dominate the learning process, leading to poor performance. The normalization (or scaling) of the feature vector adjusts the values of the feature vectors to ensure more consistent contributions from all features. For example, Min-max normalization rescales the values of the feature vectors to a fixed range (e.g., [0, 1]). Another method is the Standardization, which rescales the values of the feature vector to have zero mean and unit variance, ensuring all features contribute equally. This process ensures consistency and helps improve algorithm performance. In addition, bias removal comprises zero mean shifting, which allows focussing on variations. Such bias may arise from offsets in the feature vectors.

In the case of the afore-mentioned example, the feature vectors may be normalized. Alternatively, or additionally, these feature vectors may be adjusted to have a zero-mean value.

### Classification

The method further includes a classification step 780, which classifies the feature vectors.

The feature vectors are elements of a high-dimensional space, commonly referred to as the feature space or vector space. In other words, the feature vectors consist of a large number of components. In the example described above, the feature vectors have 11,520 components, and the feature space has 11,520 dimensions.

Moreover, because of the low number of samples (84 in the AD trial) relative to the high dimensionality of the feature vectors (11,520 components), the feature vectors are sparse in the feature space i.e., the feature vectors have few non-zero components.

In a further aspect of the disclosure, the method includes a dimensionality reduction step 770, which reduces the number of dimensions in the feature space (also known as dimensionality reduction). This step 770 lowers the computational burden of the classification and enhances statistical significance when dealing with a limited number of samples. The dimensionality reduction may be applied iteratively, a process referred to as cascading dimensionality reduction.

The dimensionality reduction step 770 may include applying Principal Component Analysis (PCA), Fisher's Linear Discriminant, Linear Discriminant Analysis (LDA), or a combination thereof. However, method is not limited to these techniques and may incorporate other mathematical approaches for dimensionality reduction.

In one aspect of the dimensionality reduction step 770, PCA is applied to the feature vectors in the feature space. The PCA preserves the indicative features (i.e., the components of the feature vectors) which enable the classification of the images of the AD image set. Moreover, the PCA enables increasing a signal-to-noise ratio (SNR). Fisher's Linear Discriminant enhances separation between classes (Healthy control/HC vs. AD-associated class, which includes the PCL sub-class and the PD sub-class) by finding a linear combination of features that maximizes a separation between these groups. LDA enables concentrating the groups in a projection space and achieving increased separation as well as clustering of the groups. The separation and the clustering enable the diagnosing of AD. The dimensionality reduction step 770 reduces the number of features (i.e., the number of components of the feature vectors) without losing information relevant to classification. In the AD trial, as described above, the image set 200 comprised 84 images of human dried plasma samples. The 11,520-dimensional feature space results in a small sample size problem. Additionally, the image set 200 exhibits sparsity, as mentioned earlier. This sparsity makes the samples statistically less significant and renders statistical conclusions less reliable. Moreover, sparsity increases the risk of overfitting and reduces the generalizability of the classification.

To tackle the challenges posed by sparsity, the dimensionality reduction is applied to the feature vectors. The dimensionality reduction may include unsupervised dimensionality reduction, supervised dimensionality reduction, or a combination of both.

PCA transforms the feature vectors into a new coordinate system, where the basis vectors of this space are referred to as principal components (PCs). The PCs are orthogonal directions that capture the most variance in the feature space. After performing the PCA, the PCs can be ordered (e.g., in a descending order) based on their contribution to the captured variance. A number of top-ranking PCs, which capture the highest amount of variance in the feature space, can be retained for classification purposes. By retaining these PCs, the resulting feature vectors will include only the components associated with the retained PCs, reducing dimensionality.

In the case of the AD trial, 83 of the ordered PCs were retained (one less than the number of samples, i.e., 84 - 1 = 83). Thereby, the original 11,520-dimensional feature vectors were reduced to 83-dimensional PC feature vectors.

The PC feature vectors follow a multivariate normal distribution across all the retained PCs. The normal distribution facilitates subsequent processing. The Q-Q plot (Quantile-Quantile plot) of FIG. 6A enables a graphical assessment of the normal distribution (or Gaussian distribution) of the PC feature vectors. If the PC feature vectors are approximately distributed according to a multivariate normal distribution, the corresponding points in the Q-Q plot will closely align along a straight line. The straight line in the Q-Q plot closely matches the normal distribution. The Shapiro-Wilk test is a test of normality and often used for small to medium sample sizes. In AD trial, testing PC feature vectors by Shapiro-Wilk (W) method yields a value of 0.99 (0.9847), which indicates normally distributed PC feature vectors. Moreover, the high average p-value of 0.5 (0.4971) indicates that the null hypothesis of normality is not rejected.

Based on the analysis, the data in all PC directions are approximately distributed according to a Gaussian distribution. If the data do not follow a Gaussian distribution, alternative methods, such as Wilcoxon test, may be considered.

In one aspect, if the PC feature vectors do not follow a parametric distribution like Gaussian and instead match a non-parametric distribution, alternative methods such as the Wilcoxon feature selection, may be applied to the PC feature vectors.

In reducing the number of dimensions of the feature space 770, the Fisher's Linear Discriminant is applied to the PC feature vectors. Fisher's Linear Discriminant Analysis is a technique that aims to maximize the inter-classes variance while minimizing the within-class variance.

The PCs are ranked based on discriminatory power using the Fisher ranking method. The Fisher ranking method calculates the variance ratio of PCs, defined as the ratio of between-classes variance (between-group variance) to within-class variance (within-group variance), which determines the discriminative power of each PC. The discriminative power is greater for those PCs with higher variance ratios. A subset of the Fisher PCs, which exhibit the highest variance ratios, is selected (referred to as the Fisher PCs).

The number of Fisher PCs equals to the total number of PCs, i.e., 83. In the case of the AD trial a subset of Fisher PCs with higher discriminatory power is selected for dimensionality reduction. These selected Fisher PCs form a Fisher PC space. As mentioned above, the selected Fisher PCs have higher variance ratios compared to the non-selected Fisher PCs.

To determine the number of Fisher PCs, the formula *n* ≥ *d*(*d -* 1)/2 is applied, where *n* represents the number of samples (84 in the case of the AD trial), and *d* represents the number of the selected Fisher PCs (i.e., the number of components of the Fisher PC feature vectors). Based on this formula, the number of Fisher PCs should be *d* ≤ 13 for the AD trial with 84 samples, as shown in FIG. 7A. This figure shows the 9 top-ranked (top 9-ranked) Fisher scores, which ensures that the W_{B} matrix is not singular. However, selecting 13 Fisher PCs results in a singular W_{B} matrix. The W_{B} matrix is calculated by dividing the intra-class scatter matrix S_{W} by the inter-class scatter matrix S_{B}. Alternatively, for the AD trial, the 9th highest-ranked PCs, sorted by their Fisher scores (i.e., the variance ratio), are selected as the Fisher PCs (see FIG. 7A). As shown in FIG. 7B, the eigenvectors of the corresponding W_{B} matrix form the Fisher PC space for sample representation, and the W_{B} matrix corresponding to the 9 Fischer PCs is non- singular.

A transformation matrix is constructed based on the Fisher PCs. By multiplying the PC feature vectors by the transformation matrix, the PC feature vectors are mapped into the Fisher PC space. In the case of the AD trial, the Fisher PC space is 9-dimensional, as previously explained, and the transformed vectors are referred to as Fisher PC feature vectors. A first transformation matrix maps from the 11520-dimensional feature space to the 83-dimensional PC space, and a second transformation matrix maps from the 83-dimensional PC space to the 9-dimesnioanl Fisher PC space. As shown in FIG. 6B, the distributions of Fisher PC vectors along the Fisher PC space directions do not deviate from a Gaussian distribution. This is confirmed by the Shapiro-Wilk test, which yields an average p-value of 0.67 (0.6703) and an average test statistic of 0.9883, confirming a close fit to a normal distribution.

The following Table 1 summarizes the cascading dimensionality reduction applied to the feature vectors in the AD trial.

**Table 1**

| **Metric/Step** | **Value/Description** |
|---|---|
| **Feature Space Dimensions** | 11,520 |
| **Number of Samples** | 84 |
| **Retained PCs** | 83 |
| **Q-Q Plot Assessment (PC space)** | Data aligns closely with straight line |
| **Shapiro Wilk Text Statistic (PC space)** | 0.99 (0.9847) |
| **Shapiro Wilk Text p-value (PC space)** | 0.5 (0.4971) |
| **PCs Ranking Method** | Fisher Ranking |
| **Maximum Allowed Fisher PCs (*n*≥*d*(*d*-1)/2)** | 13 |
| **Selected Fisher PCs for final transformation** | 9 |
| **Fisher PC space dimensions** | 9 |
| **Q-Q Plot Assessment (Fisher PC space)** | Distributions align with Gaussian distribution |
| **Shapiro-Wilk Test Statistic (Fisher space)** | 0.99 (0.9883) |
| **Shapiro-Wilk Test p-value (Fisher space)** | 0.67 |
| **Final Dimensionality Reduction Method** | Linear Discriminant Analysis (LDA) |
| **Resulting LD Space Dimensionality (AD image set)** | 1 (2 classes - 1) |

In one aspect of reducing the dimensionality of the feature space 770, LDA is applied to the feature vectors. LDA assumes that the feature vectors follow a multivariate Gaussian distribution (see above and FIG. 6A).

For example, LDA is applied to the Fisher PC feature vectors to further reduce the dimensionality to the number of classes minus one and thereby enabling effective discrimination between classes. LDA identifies lines (or hyperplanes) that maximize the inter-classes separability while minimizing the intra-class scatter. These lines are determined through the eigen decomposition of the W_{B} matrix.

A challenge in applying LDA arises when the number of samples (n) is much smaller than the number of features (m), i.e. *n* « *m*. In such cases, the W_{B} matrix becomes singular, preventing its inversion and potentially causing overfitting. To address this issue, regularization techniques are required. A common approach is to apply PCA before LDA for dimensionality reduction, ensuring that the WB matrix remains well-conditioned. This approach was applied in the AD trial.

In the AD trial, there are two classes (i.e., AD-positive or AD-negative). Therefore, the LDA space is one-dimensional. As illustrated in FIG. 7B, the eigenvector corresponding to the largest eigenvalue is selected to define the LDA space.

LDA facilitates both dimensionality reduction and classification. If the Fisher PC feature vectors form well-defined clusters after applying LDA, additional classification steps may be unnecessary.

### Evaluation

To determine whether the samples in the AD trial are well-clustered in LDA space or if additional classification is needed, a Receiver Operating Characteristic (ROC) curve was used. The ROC curve is suitable for evaluating and comparing binary classification models. The ROC curve illustrates the relationship between the True Positive Rate (sensitivity /recall) and the False Positive Rate (1- specificity) across various classification thresholds. A threshold on the ROC curve can be chosen to balance sensitivity and specificity based on user requirements. Preferably, the threshold is an optimal point on the ROC curve, indicating the point with balanced sensitivity and specificity. The threshold may be selected using criteria like maximizing Youden's index (Sensitivity+ Specificity- 1) or through a cost-benefit analysis tailored to the specific problem.

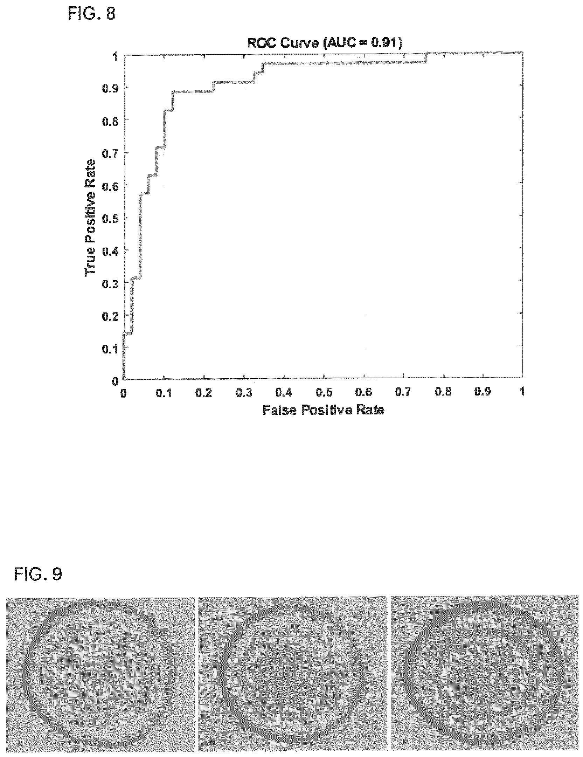

FIG.8 illustrates the ROC curve of the AD classification model. Table 2 presents the key evaluation metrics of the AD classification model. These metrics provide an overview of the classification model's performance. In Table 2, the AUC-ROC is calculated over the entire ROC curve, while all other metrics are computed at the selected optimal threshold.

**Table 2**

| Metric | Value |
|---|---|
| AUC-ROC | 0.91 |
| Sensitivity (True Positive Rate) | 0.88 |
| Specificity (True Negative Rate) | 0.89 |
| Accuracy | 0.90 |
| Precision | 0.93 |
| F1 Score | 0.91 |
| Matthews Correlation Coefficient (MCC) | 0.8 |

The following sections provide an explanation of the metrics listed in Table 2.

Area under the ROC Curve (AUC-ROC) ranges from 0 to 1. A score of 1 indicates perfect classification, while a score of 0.5 suggests performance equivalent to a random classifier. A score below 0.5 indicates the worse than random classification performs. In the AD trial, an AUC-ROC of 0.91 indicates that the classification model effectively distinguishes between AD-positive and AD-negative classes, making it effective for diagnosing AD.

Sensitivity, also known as the true positive rate, ranges from 0 to 100%. The sensitivity represents the percentage of actual positive samples correctly identified by the classification model. A sensitivity of 100% means the classification model correctly identifies all positive instances. In the case of AD trial, a sensitivity of 88% indicates that the classification model effectively identifies most of the positive cases.

Specificity, also known as the true negative rate, ranges from 0 to 100%. The specificity measures the percentage of actual negative cases correctly identified by the classification model. A specificity of 100% means the classification model correctly identifies all negative instances. A score of 0% means the classification model fails to identify any negative instances. In the AD trial, a specificity of 88.57% indicated that the classification model effectively identified most of the negative cases.

Accuracy ranges from 0 to 100% and reflects the overall correctness of the classification across both classes. In the AD trial, an accuracy of 90% suggests that the classification model's predictions are highly accurate overall.

Precision ranges from 0 to 100% and measures the proportion of positive predictions that are actually correct. A precision of 100% means that all positive predictions are true positives, while a score of 0% indicates that none of the positive predictions are correct. In the AD trial, a precision of 93% demonstrates that the classification model is highly reliable in its positive predictions.

The F1 Score, ranging from 0 to 100%, is the harmonic mean of precision and sensitivity, providing a balance between the two. A score of 100% indicates a perfect balance, while 0% reflects no balance. In the AD trial, an F1 Score of 91% indicates that the classification model maintains a strong balance between precision and recall.

The MCC (Matthews Correlation Coefficient) ranges from -1 to 1. A MCC value of 1 indicates perfect classification, 0 suggests the classification is no better than random, and -1 implies complete disagreement between the classification and ground truth, indicating that the classification model makes incorrect predictions. In the AD trial, an MCC of 0.8 reflects a strong positive correlation between the classification and the ground truth, indicating that the classification model's predictions are highly accurate.

The afore-mentioned metrics demonstrate that the classification model performs well and effectively captures the AD-indicative features (patterns) in the image set 200.

### Validation

Due to the limited number of samples, a Leave-One-Out (LOO) cross-validation was conducted to provide an unbiased estimate of the classification model's performance. In each round of LOO, one image 200a, 200b... (one sample) from the image set is set aside for testing, while the remaining images 200a, 200b...(samples) are used for training. In the AD trial, in each round, 83 images of the image set 200 were used for the training and one is assigned for testing. The 83 samples are projected into an 82-dimensional principal components (PC) space, ensuring these samples have distributions close to a multivariate Gaussian distribution, which is validated using Q-Q plots and the Shapiro Wilk test. Subsequently, the data is projected into the Fisher principal component space, maintaining Gaussian distribution characteristics. Given the sample size (83), the maximum dimensionality for Fisher PCs is determined to be 13 using the formula *n* ≥ *d*(*d* -1)/2*.* However, most rounds utilize a 3-dimensional Fisher space to avoid singularity issues with the W_{B} matrix. After transforming the training and test samples into the linear discriminant (LD) space, a receiver operating characteristic (ROC) curve is generated for each round. The area under the ROC curve (AUC-ROC) is calculated, measuring the classification model's ability to differentiate samples across thresholds. The optimal point on the ROC curve is identified to evaluate the classification model's accuracy in classifying the test sample. The Mean value of all 83 rounds is reported as results. Key performance metrics are summarized in the Table 3.

**Table 3**

| **Metric** | **Value** |
|---|---|
| **Number of Samples** | 83 |
| **Principal Components Space** | 82-dimensional |
| **Q-Q Plot Assessment (PC space)** | Distributions align with Gaussian distribution |
| **Shapiro-Wilk Test (PC space)** | Statistic: 0.9847, p-value: 0.5824 |
| **Max allowed Fisher PCs** | 13 |
| **Selected Fisher PCs for transformation** | 3 |
| **Q-Q Plot Assessment (Fisher space)** | Distributions align with Gaussian distribution |
| **Shapiro-Wilk Test (Fisher space)** | Statistic: 0.9814, p-value: 0.5131 |
| **Average AUC-ROC** | 0.85 |
| **Average Specificity** | 0.83 |
| **Average Sensitivity** | 0.80 |
| **Average Accuracy** | 0.81 |
| **Average Precision** | 0.88% |
| **Average F1 Score** | 0.84 |

### Disease Differentiation

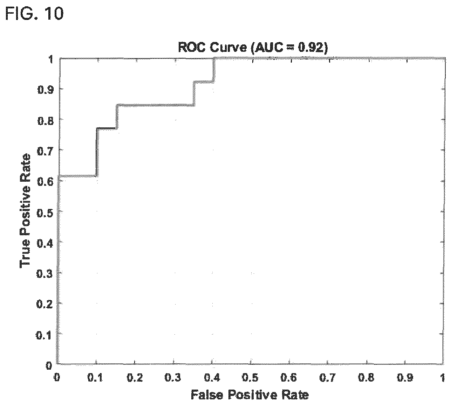

In a subsequent analysis, it was further examined whether the extracted features from microscopy images of dried plasma samples differ only between healthy individuals and patients, or if they also vary across patients with different diseases. To explore this and evaluate the method's effectiveness and stability, a combined image set of human dried plasma samples from lung cancer and Alzheimer's patients was created. This combined set includes 13 lung cancer images and 20 Alzheimer's images. An illustration of several lung cancer images is shown in FIG. 9. The inclusion of human dried plasma cancerous samples is based on literature suggesting an inverse relationship between these two diseases. Cancer is characterized by uncontrolled cell growth and survival, whereas AD involves progressive neurodegeneration and brain cell loss. Factors that promote cell growth in cancer are often reduced in AD, contributing to nerve cell damage. Consequently, individuals with lung cancer may have a lower risk of developing AD, or vice versa. The classification model for the second trial was conducted and evaluated, followed by LOO validation. The ROC curve of the classification model is shown in FIG. 10, and additional evaluation and validation metrics are presented in Table 4.

**Table 4**

| | Classification Model | LOO (average value) |
|---|---|---|
| **Feature space** | | |
| Dimensionality | 11,520 | 11,520 |
| Number of samples | 33 (20 Alzheimer's, 13 cancer) | 32 |

| **Principal component (PC) space** | | |
|---|---|---|
| Dimensionality | 32 | 31 |
| Q-Q plot | Data reflect Gaussian distribution | |
| Shapiro-Wilk test | Statistics: 0.9669, | Statistics: 0.9449, |
| | p-value: 0.5011 | p-value: 0.5121 |

| **Fisher ranking space** | | |
|---|---|---|
| Max. allowed Fisher PCs | 8 | 8 |
| Selected Fisher PCs | 3 | 3 |
| Q-Q plot | Data reflect Gaussian distribution | |
| Shapiro-Wilk test | Statistics: 0.9709, | Statistics: 0.9314, |
| | p-value: 0.5721 | p-value: 0.5246 |

| **Linear discriminant space** | | |
|---|---|---|
| Dimensionality | 1 (Class numbers -1) | 1 (Class numbers -1) |

The classification model for Alzheimer's and cancerous samples demonstrates strong performance, particularly in terms of AUC-ROC, precision, and sensitivity.

The classification model for Alzheimer's and cancerous samples achieved an excellent AUC-ROC of 0.92, indicating strong discrimination ability. Even in LOO validation, an AUC of 0.84 reflects its robustness.

Both sensitivity and specificity are balanced at 85% (and around 82-83% in LOO), which indicates the classification model is effective in distinguishing Alzheimer's from cancerous samples.

The classification model exhibits strong precision (90%) and high F1 score (88%), illustrating its effectiveness in reducing false positives while maintaining overall performance.

The balanced sensitivity, specificity, and AUC-ROC for the AD trial and AD/lung cancer trial underscore the robustness and stability of the method 700 according to the disclosure.

### Properties

The preprocessing 730 of the image set 200 facilitates the feature detection 50. The use of one or more filters, tailored to the specific characteristics of the image set 200, enables effective feature extraction. Additionally, successive dimensionality reductions 770 based on data distributions, sample clustering, and separation of distinct groups/classes, further enhance the method's overall efficiency by improving data organization and facilitating more effective analysis.

The results show a consistent Gaussian distribution of pixel intensities throughout the image processing pipeline. The original microscopy images exhibit a broad Gaussian mixture model (see FIG. 4A), reflecting the complex and varied structures within the microscopy images. After the selection of the ROI in step 735, the histogram demonstrates a more focused Gaussian distribution, indicating that the ROI captures the most relevant area. The edges 52, comprising around 20,000 pixels, follow a normal distribution (see FIG. 4D), suggesting that Canny edge detection effectively identified well-defined edges with consistent intensity variations. Lastly, downsampling the images preserves the Gaussian model (see FIGS. 4E and 4F) and reduces the range of intensity values, streamlining the data without significant loss of detail, which facilitates faster processing. FIG.13 illustrates a method for detecting Alzheimer's disease using optical microscopy images of human dried plasma samples. A newly acquired image 200' is fed into the algorithm as an input, at step S1. After preprocessing and feature extraction (step S2), a feature vector is generated for the image. Following cascaded dimensionality reduction, the sample is mapped to the LDA space (step S3). The classification model's accuracy in classifying a new sample as healthy or Alzheimer's is evaluated using the ROC and AUC-ROC metrics.

## Claims

1. A computer-implemented method for image-based classification, usable to detect diseases, such as Alzheimer's disease, using microscopy images of human dried plasma samples (20a, 20b, ...), wherein the microscopy images (200a, 200b, ...) have been obtained through optical microscopy imaging, the method comprising:
- preprocessing (730) microscopy images (200a, 200b, ...), wherein the preprocessing (730) comprises:
∘ selecting (735) a region of interest ROI (233) in microscopy images (200a, 200b, ...);
∘ transforming (739) the region of interest into polar coordinates to obtain a transformed ROI (235),
- extracting (760) features (50) from the transformed ROI (235) using at least one of trigonometric, non-trigonometric, structural, and non-structural methods to generate a plurality of feature vectors in a feature space;
- reducing (770) a dimensionality of the feature space to obtain a reduced feature space;
- classifying (780) the samples using the plurality of feature vectors in the reduced feature space; thus producing a classification model (1235).

2. The method of claim 1, further comprising enhancing (741) the images (200a, 200b, ...) and/or enhancing a contrast of a selected ROI (233).

3. The method (700) of any one of the claims 1 to 2, wherein the feature extraction (760) includes detecting edges (52) of patterns in the transformed ROI and generating a feature image.

4. The method of claim 3, wherein the method further includes downsampling the feature image, in particular using multi-stage downsampling.

5. The method of claim 4, further comprising filtering the downsampled feature image, preferably using Gabor filters.

6. The method of claim 5, further comprising downsampling of filtered and downsampled feature image.

7. The method of any of claims 4 to 6, wherein a plurality of filters is applied to the microscopy images, preferably Gabor filters, and wherein the downsampled feature image is filtered using said plurality of filters, further downsampled, and then vectorized, to obtain feature vectors, and wherein the feature vectors are stacked to form an image feature vector.

8. The method of claim 7, further comprising normalizing the feature vectors and/or adjusting a mean value of the individual feature vectors to zero.

9. The method of any one of claims 1 to 8, wherein the classification (780) comprises one or more of principal component analysis, Fisher's Discriminant, or Linear Discriminant Analysis.

10. The method of any one of claims 1 to 9, wherein classification performance is evaluated using metrics such as AUC-ROC, sensitivity, and specificity, and/or wherein classification is validated using K-Fold cross-validation techniques, in particular leave-one-out (LOO) cross-validation.

11. A computer program product, stored on a non-transitory computer-readable medium, the computer program product comprising instructions that, when executed by a processor (1220), causes the processor (1220) to execute the method of any one of claims 1 to 10.

12. A method for detecting Alzheimer's disease using human dried plasma samples (20a, 20b, ...) comprising:
- inputting (S1) a microscopy image (200') of human dried plasma sample into a processor (1220),
- extracting (S2) features from the input image (200); and
- processing (S3) the extracted features using the classification model (1235) obtained with the method of any of claims 1 to 11.

13. A system (1200) for detecting disease such as Alzheimer's disease using human dried plasma samples (20a, 20b, ...), the system comprising:
- an image database (1210) storing microscopy images (200a, 200b, ...) of the human dried plasma samples (20a, 20b, ...);
- a classification model (1235) trained and validated using a plurality of microscopy images (200a, 200b...) of the human dried plasma samples (20a, 20b, ...) according to the method of any one of claims 1 to 11; and
- a processor (1220) configured to input at least one microscopy image (200a, 200b...).
